# EUROPÄISCHE PATENTSCHRIFT

(11) **EP 0 543 096 B1**
(45) Veröffentlichungstag und Bekanntmachung des Hinweises auf die Patenterteilung: **06.11.1996**
(21) Anmeldenummer: 92114900.1
(22) Anmeldetag: 01.09.1992
(51) Int. Cl.: A01B 33/08, A01B 71/04

(54) **Lagerung für Werkzeugkreisel einer Kreiselegge**
Mounting of a tool of rotary harrow
Logement pour un outil d'une herse rotative

(30) Priorität: 15.11.1991 DE 9114236 U
(43) Veröffentlichungstag der Anmeldung: 26.05.1993
(73) Patentinhaber: Rabewerk GmbH + Co., 49152 Bad Essen (DE)
(72) Erfinder: Warnking, Richard, Dipl.-Ing., W-4514 Bad Essen (DE)
(74) Vertreter: Missling, Arne, Dipl.-Ing.

(56) Entgegenhaltungen:
- DE-A- 2 947 340
- DE-A- 3 916 760
- DE-U- 9 006 000
- FR-A- 2 512 627
- FR-A- 2 623 360
- US-A- 3 111 917
- US-A- 3 713 494

## Beschreibung

Die Erfindung bezieht sich auf eine Lagerung für Werkzeugkreisel einer Kreiselegge mit einem zylindrischen Lagergehäuse zur Aufnahme der Lager, einer Welle und jeweils einem am unteren Ende der Welle angeordneten Werkzeugtrager und einem am oberen Ende der Welle angeordneten Zahnrad, wobei die Lager mittels einer auf die Welle aufschraubbaren Mutter unabhängig von der Befestigung des Werkzeugträgers und des Zahnrads vorspannbar sind.

Zur Lagerung der Welle eines Werkzeugkreisels werden üblicherweise zwei Lager, vorzugsweise Kegelrollenlager verwendet. Die Lagerung muß ausreichend robust sein, da beim praktischen Betrieb einer Kreiselegge erhebliche Kräfte, insbesondere Schlag- oder ruckartige Kräfte über die Werkzeuge auf die Lagerung übertragen und von dieser aufgenommen werden müssen. Da an der Welle der Werkzeugkreisel das Antriebszahnrad befestigt ist und da die einzelnen Zahnräder der einzelnen Werkzeugkreisel miteinander in Eingriff sind, werden auch über die Zahnräder erhebliche Kräfte, insbesondere ruckartige oder stoßartige Kräfte übertragen, wobei sich hier sowohl Belastungen des Werkzeugkreisels selbst, als auch Belastungen benachbarter Werkzeugkreisel auswirken.

Aus dem Stand der Technik sind vielfältige Ausgestaltungsmöglichkeiten derartiger Lagerungen bekannt, welche jedoch insgesamt spezifische Nachteile aufweisen und den Anforderungen nicht genügen. Den nächstkommenden Stand der Technik bildet die DE-OS 26 37 722. Diese Druckschrift zeigt die Ausgestaltung eines Lagers für die Welle eines Werkzeugkreisels, bei welcher die beiden Lager mittels einer separaten Mutter unabhängig von der Befestigung des Werkzeugträgers oder des Zahnrades vorspannbar sind. Hieraus ergibt sich der Vorteil, daß bei einer Lockerung des Werkzeugträgers oder des Zahnrades die Vorspannung der Lagerung nicht beeinträchtigt wird. Nachteilig ist jedoch, daß das Zahnrad mittels einer Verzahnung auf das freie Ende der Welle aufgesteckt ist. Eine Sicherungsmöglichkeit ist nicht vorgesehen, vielmehr hält ein Deckel das Zahnrad in der gewünschten Stellung. Da beim Drehen des Werkzeugkreisels pro Umdrehung zwei schlagartige Belastungen auftreten, nämlich beim Auftreffen der Werkzeuge auf Steine oder ähnliches und da diese Belastungen auch auf benachbarte Zahnräder übertragen werden, ergeben sich sehr ungleichmäßige Belastungsverhältnisse, welche den Sitz des Zahnrades extrem belasten.

Bei der gezeigten Ausgestaltung führt dies zwangsläufig zu einer Lockerung des Zahnrades und zu einem Wandern des Zahnrades auf der Welle. Der Deckel, welcher das Zahnrad halten soll, vermag diesen Belastungen nicht in zuverlässiger Weise zu widerstehen. Zusätzlich ist das Zahnrad über ein Evolventenprofil auf der Welle aufgesetzt, welches zusätzlich eine Lockerung des Zahnrades begünstigt.

Bei der aus der DE-OS 29 47 340 vorbekannten Kreiselegge erfolgt ebenfalls eine separate Vorspannung des Lagers, das Zahnrad ist jedoch hierbei auf einer Platte aufgesetzt, welche mit der Welle verbunden ist. Auch dies trägt nicht zu einer ausreichend stabilen Befestigung des Zahnrades bei, da die Befestigungspunkte des Zahnrades auf der Platte erheblichen stoßartigen Belastungen ausgesetzt sind und sich deshalb leicht lockern können. Des weiteren ist der Werkzeugträger über ein Keilwellenprofil aufgesetzt, das sich lockern kann. Eine Lockerung der Befestigung des Zahnrades oder des Werkzeugträgers führt in jedem Fall auch zu einer erhöhten Beanspruchung bzw. Schädigung der Lager und auch der Verzahnung der Zahnräder.

Die DE-PS 27 52 760 zeigt eine Bodenbearbeitungsmaschine, bei welcher die Lager in Form von Kugellagern ausgebildet sind, welche nicht gegeneinander verspannt sind. Das obere Lager wird lediglich durch das aufgesteckte Zahnrad gehalten, eine ausreichend stabile Befestigung und Vorspannung der Lager ist damit nicht gegeben. Die Aufsteckung des Zahnrades weist ähnliche Nachteile auf, wie bei der Ausgestaltung gemäß der DE-OS 26 37 722.

Die US-PS 3,713,494 und die GB-PS 1,169,371 zeigen jeweils Lösungsmöglichkeiten, bei welchen die Verspannung des Lagers zusammen mit der Verspannung eines weiteren Bauelements, nämlich entweder des Werkzeugträgers oder des Zahnrades erfolgt. Bei Beschädigung oder Lockerung eines dieser Bauelemente erfolgt zugleich eine Beeinflussung der Vorspannung des Lagers, wodurch das Lager beschädigt wird und die Kreiselegge insgesamt erheblichen Schaden erleidet.

Eine weitere Ausgestaltungsform ist aus der DE-OS 28 51 803 vorbekannt. Dort sind sowohl das Zahnrad als auch der Werkzeugträger jeweils auf ein Keilwellenprofil aufgesetzt und mittels einer Mutter verspannt. Die Verspannung des Zahnrades bzw. des Werkzeugträgers führt gleichzeitig zur Vorspannung der Lager. Das Aufsetzen des Werkzeugträgers und des Zahnrades auf ein Keilwellenprofil führt zu einer sehr ungünstigen Verbindung, da sich ein erhebliches Spiel ausbilden kann, insbesondere dann, wenn Biegemomente auf die Befestigungsbereiche aufgebracht werden, die zu einem Verklemmen der Lager führen. Da bei einem Werkzeugkreisel die stoßartigen Kräfte an den Zinkenspitzen angreifen, ist bis zum Lagerungsbereich des Werkzeugträgers auf der Welle ein sehr großer Hebelarm vorhanden. Dies führt zu einem Verkanten und zu einer Lockerung der Keilwellenprofil-Lagerung.

Die DE-OS 26 24 476 zeigt eine Lagerung, bei welcher das Zahnrad zwischen dem oberen und dem unteren Lager angeordnet und ebenfalls auf eine Keilwelle aufgesteckt ist. Der besondere Nachteil hierbei liegt darin, daß die beiden Lager nicht in einem gemeinsamen Lagergehäuse, sondern an unterschiedlichen Teilen eines Kastenprofils angebracht sind. Hierdurch ergeben sich bei Belastungen Verformungen insbesondere des Gehäuses, welche zu einer sehr kurzen Lebensdauer der gesamten Anordnung führen.

Der Erfindung liegt die Aufgabe zugrunde, eine Lagerung der eingangs genannten Art zu schaffen, welche bei einfachem Aufbau, einfacher Herstellbarkeit und einfacher Wartung die Nachteile des Standes der Technik vermeidet und auch bei ungünstigen Betriebsverhältnissen eine ausreichende Festigkeit aufweist.

Erfindungsgemäß wird die Aufgabe dadurch gelöst, daß der zur Befestigung des Zahnrads dienende Teil der Welle Konusförmig ausgebildet ist und daß das Zahnrad mit eine konusförmigen Ausnehmung versehen ist und daß zur Aufspannung des Zahnrads auf das obere freie Ende der Welle eine Mutter aufgeschraubt ist.

Die erfindungsgemäße Lagerung zeichnet sich durch eine Reihe wesentlicher Vorteile aus. Durch die konusförmige und gegebenenfalls profilierte Aufspannung des Zahnrades ist ein sicherer strammer Sitz des Zahnrades auf der Welle gewährleistet, so daß die erforderlichen Drehmomente ohne Lockerung des Zahnrades übertragen werden können.

Durch die separate Aufspannbarkeit des Zahnrades ist die Vorspannung der Lager zur Lagerung der Welle gänzlich unbeeinflußt von der Befestigung des Zahnrades. Das Zahnrad wird durch die Mutter auf den Konus aufgepreßt, so daß im montierten Zustand selbst unter hoher Belastung kein Spiel vorhanden ist.

In einer günstigen Weiterbildung der Erfindung ist vorgesehen, daß zur Ausrichtung des Zahnrads zwischen den Konus der Welle und die Ausnehmung des Zahnrads eine Paßfeder eingesetzt ist. Diese Paßfeder ist aus Gründen der Kraftübertragung nicht erforderlich, sie erleichtert jedoch das Zuordnen der Ausrichtung des Zahnrades und bewirkt eine zusätzliche Sicherung.

Weiterhin kann es erfindungsgemäß günstig sein, wenn der Werkzeugträger und die Welle einstückig ausgebildet sind. Diese Ausgestaltungsform führt zu einer nicht lösbaren Verbindung zwischen Werkzeugträger und der Welle und verhindert, daß durch die stoßartigen Belastungen Lockerungen eintreten, so wie dies beim Stand der Technik möglich ist.

An dem zylindrischen Lagergehäuse ist bevorzugterweise ein plattenförmiger Flansch befestigt. Dieser kann mit dem Kreiseleggengehäuse verschraubt oder verschweißt sein. Er versteift zusätzlich das Getriebegehäuse und schont dadurch sowohl die Lager als auch die Verzahnung der Zahnräder.

In einer besonders günstigen Ausgestaltung der Erfindung ist vorgesehen, daß die Mittelebene des Zahnkranzes des Zahnrads zur Ebene der konusförmigen Ausnehmung versetzt ist. Das Zahnrad ist somit tiefer angeordnet, als der Konus. Dies bringt hinsichtlich der Festigkeit der Lagerung erhebliche Vorteile, da durch die tiefe Anordnung des Zahnkranzes eine hutartige Form des Zahnrades ausgebildet wird, durch welche sich ein Hebelarm gegenüber dem Kraftangriffspunkt im Zahnkranz ergibt. Für diese Form des Zahnrades ist der erfindungsgemäße konische Sitz besonders vorteilhaft, da keine Lockerung des Zahnrades auftreten kann.

Es ist somit festzustellen, daß die erfindungsgemäße Ausgestaltung der Lager ein hohes Maß an Betriebssicherheit gewährleistet, da eine Lockerung oder Beschädigung eines der Bauelemente, nämlich der Lager oder des Zahnrades oder der Werkzeuge nicht zu einem Lockern oder "Ausleiern" der restlichen Bauelemente führt.

Im folgenden wird die Erfindung anhand eines Ausführungsbeispiels in Verbindung mit der Zeichnung beschrieben. Dabei zeigt:
- Fig. 1: eine Seitenansicht, teils im Schnitt, einer erfindungsgemäßen Lagerung für einen Werkzeugkreisel, und
- Fig. 2: eine Seitenansicht, ebenfalls im Schnitt, in einer um 90° versetzten Blickrichtung relativ zur Fig. 1.

Zur Vereinfachung der Darstellung wird in den Figuren im wesentlichen nur ein einziger Werkzeugkreisel beschrieben. Es versteht sich, daß, wie bei einer Kreiselegge üblich, mehrere derartige Werkzeugkreisel an einem Kastenboden gelagert sind.

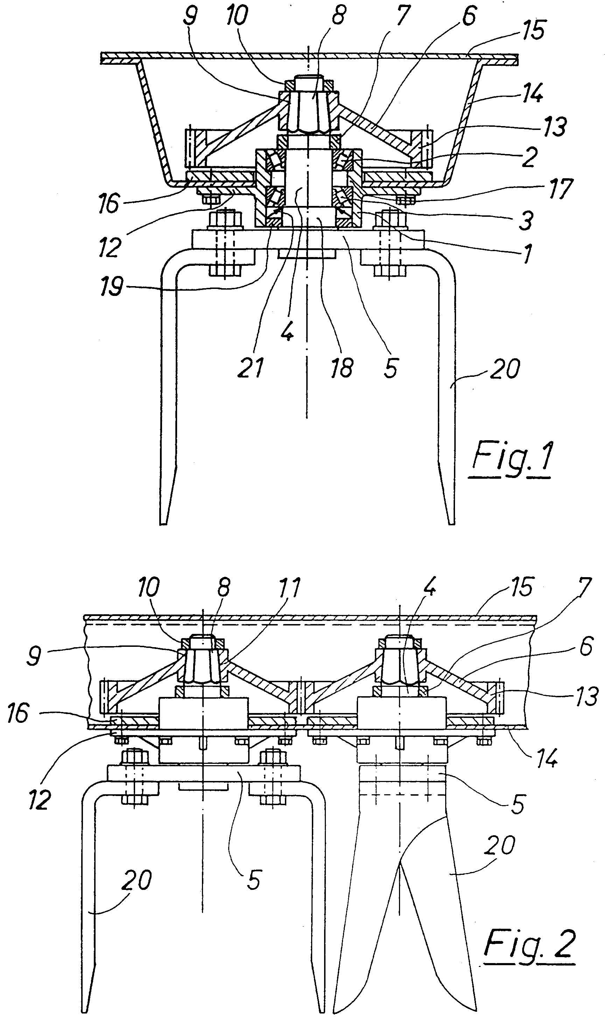

Fig. 1 zeigt in schematischer Weise einen mit einem U-Profil ausgebildeten Kastenboden 14, welcher durch einen Deckel 15 abgedeckt ist. Der Kastenboden 14 weist an einem unteren Bereich eine Ausnehmung auf, in welche ein zylinderförmiges Lagergehäuse 1 eingesetzt ist. Dieses ist mit einem plattenartigem Flansch 12 versehen und kann mit dem Kastenboden 14 verschraubt werden, so wie dies in den Figuren gezeigt ist. Zur Versteifung kann ein plattenförmiges Widerlager 16 vorgesehen sein, in welches die Schrauben eingeschraubt werden.

Das Lagergehäuse 1 umfaßt im mittleren Bereich einen nach innen gerichteten Bund 17, gegen welchen sich Lager 2, 3 abstützen. Diese sind als Kegelrollenlager ausgebildet und dienen zur Lagerung einer Welle 4, welche mit einem Wellenbund 18 versehen ist und an ihrem oberen Ende ein Gewinde trägt, auf welches eine Mutter 7 aufschraubbar ist. Die Lager 2, 3 sind somit mittels der Mutter 7 gegen den Bund 18 vorspannbar. An der Unterseite der Lageranordnung sind eine Lippendichtung 21 und eine Abschlußscheibe 19 eingesetzt, welche das Eindringen von Schmutz verhindern.

Erfindungsgemäß weist die Welle 4 an ihrem oberen Bereich einen sechseckförmig profilierten Konus 8 auf, auf welchen ein Zahnrad 6 aufgesetzt ist. Das Zahnrad 6 umfaßt eine zentrische, konische, sechseckförmig profilierte Ausnehmung 9 und wird mittels einer Mutter 10, welche auf ein Gewinde der Welle 4 aufgeschraubt ist, gespannt. Zur zusätzlichen Sicherung dient eine Paßfeder 11.

Am unteren Ende der Welle 4 ist ein Werkzeugträger 5 angeordnet, welcher einstückig mit der Welle verbunden ist, beispielsweise durch Verschweißen. Alternativ hierzu kann der Werkzeugträger 5 auch aufgeschraubt sein. An dem Werkzeugträger 5 sind in bekannter Weise Zinken 20 befestigt.

Aus den Darstellungen der Fig. 1 und 2 ergibt sich, daß der Zahnkranz 13 des Zahnrades 6 nach unten gezogen ist, so daß sich die Mittellinie des Zahnkranzes 13 im wesentlichen in der Ebene des oberen Lagers 2 befindet. Hierdurch ergeben sich besonders günstige Kraftverhältnisse.

Da die Figuren nur schematisch die Erfindung wiedergeben, wurde auf die Beschreibung zusätzlicher Bauelemente, beispielsweise zusätzlicher Dichtungen oder ähnlichem verzichtet.

## Patentansprüche

1. Lagerung für Werkzeugkreisel einer Kreiselegge mit einem zylindrischen Lagergehäuse (1) zur Aufnahme der Lager (2,3), einer Welle (4) und jeweils einem am unteren Ende der Welle (4) angeordneten Werkzeugträger (5) und einem am oberen Ende der Welle (4) angeordneten Zahnrad (6), wobei die Lager (2,3) mittels einer auf die Welle (4) aufschraubbaren Mutter (7) unabhängig von der Bewegung des Werkzeugträgers (5) und des Zahnrades (6) vorspannbar sind, dadurch gekennzeichnet, daß der zur Befestigung des Zahnrads (6) dienende Teil der Welle (4) Konusförmig ausgebildet ist und daß das Zahnrad (6) mit einer konusförmigen Ausnehmung (9) versehen ist und daß zur Aufspannung des Zahnrads (6) auf das obere freie Ende der Welle (4) eine Mutter (10) aufgeschraubt ist.

2. Lagerung nach Anspruch 1, dadurch gekennzeichnet, daß zur Ausrichtung des Zahnrads (6) zwischen den Konus (8) der Welle (4) und die Ausnehmung (9) des Zahnrads (6) eine Paßfeder (11) eingesetzt ist.

3. Lagerung nach Anspruch 1 oder 2, dadurch gekennzeichnet, daß der Werkzeugträger (5) und die Welle (4) einstückig ausgebildet sind.

4. Lagerung nach einem der Ansprüche 1 bis 3, dadurch gekennzeichnet, daß an dem zylindrischen Lagergehäuse (1) ein plattenförmiger Flansch (12) befestigt ist.

5. Lagerung nach einem der Ansprüche 1 bis 4, dadurch gekennzeichnet, daß die Mittelebene des Zahnkranzes (13) des Zahnrads (6) zur Ebene der konusförmigen Ausnehmung (9) versetzt ist.

6. Lagerung nach Anspruch 5, dadurch gekennzeichnet, daß die Mittelebene des Zahnkranzes (13) des Zahnrads (6) im wesentlichen im Bereich der Lager (2,3) der Welle (4) angeordnet ist.

7. Lagerung nach einem der Ansprüche 1 bis 6, dadurch gekennzeichnet, daß der Konus (8) und die Aufnahme des Zahnrades (6) profiliert sind und z. B. quadratisch, seckseckförmig ausgebildet oder mit einer Evolventenverzahnung versehen sind.

## Claims

1. A mounting for rotary tools of a rotary harrow, comprising a cylindrical bearing housing (1) for receiving the bearings (2, 3), a shaft (4), a tool holder (5) arranged at the lower end of the shaft (4) and a gearwheel (6) arranged at the upper end of the shaft (4), wherein the bearings (2, 3) are preloadable, independently of the movement of the tool holder (5) and the gearwheel (6), by means of a nut (7) which can be screwed onto the shaft (4), characterised in that the part of the shaft (4) serving to fix the gearwheel (6) is conical and in that the gearwheel (6) is provided with a conical recess (9) and in that a nut (10) is screwed onto the upper free end of the shaft (4) for the purpose of clamping the gearwheel (6).

2. A mounting according to claim 1, characterised in that a feather key (11) is inserted between the cone (8) of the shaft (4) and the recess (9) of the gearwheel (6) for the purpose of aligning the gearwheel (6).

3. A mounting according to claim 1 or 2, characterised in that the tool holder (5) and the shaft (4) are formed in one piece.

4. A mounting according to any one of claims 1 to 3, characterised in that a plate-shaped flange (12) is fixed to the cylindrical bearing housing (1).

5. A mounting according to any one of claims 1 to 4, characterised in that the central plane of the rim (13) of the gearwheel (6) is offset relative to the plane of the conical recess (9).

6. A mounting according to claim 5, characterised in that the central plane of the rim (13) of the gearwheel (6) is arranged substantially in the region of the bearings (2, 3) of the shaft (4).

7. A mounting according to any one of claims 1 to 6, characterised in that the cone (8) and the recess of the gearwheel (6) are profiled and, for example, are square or hexagonal or are provided with involute toothing.

## Revendications

1. Pivot pour outil rotatif d'une herse rotative comportant un logement cylindrique (1) pour des roulements destiné à recevoir les roulements (2, 3), un arbre (4) et un porte-outil (5) placé à l'extrémité inférieure de l'arbre (4) et une roue dentée (6) placée à l'extrémité supérieure de l'arbre (4) , les roulements (2, 3) pouvant être mis sous précontrainte au moyen d'un écrou (7) qui peut être vissé sur l'arbre (4) indépendamment du mouvement du porte-outil (5) et de la roue dentée (6),
caractérisé en ce que
la partie de l'arbre (4) servant à fixer la roue dentée (6) a une forme conique,
en ce que la roue dentée (6) est pourvue d'un alésage conique (9), et
en ce que, pour la fixation de la roue dentée (6), un écrou (10) est vissé sur l'extrémité libre supérieure de l'arbre (4).

2. Pivot selon la revendication 1, caractérisé en ce que
pour la bonne mise en place de la roue dentée (6), un ressort (11) d'adaptation est installé entre le cône (8) de l'arbre (4) et l'alésage (9) de la roue dentée (6).

3. Pivot selon la revendication 1 ou 2, caractérisé en ce que
le porte-outil (5) et l'arbre (4) sont faits d'une seule pièce.

4. Système de paliers selon l'une des revendications 1 à 3, caractérisé en ce que
une bride plate (12) est fixée au logement cylindrique (1) des roulements.

5. Pivot selon l'une des revendications 1 à 4, caractérisé en ce que
le plan moyen de la couronne dentée (13) de la roue dentée (6) est décalé par rapport au plan de l'alésage conique (9).

6. Système de paliers selon la revendication 5, caractérisé en ce que
le plan moyen de la couronne dentée (13) de la roue dentée (6) est placé essentiellement dans la zone des roulements (2, 3) de l'arbre (4).

7. Pivot selon l'une des revendications 1 à 6, caractérisé en ce que
le cône (8) et l'alésage de la roue dentée (6) sont profilés et ont par exemple, une forme carrée, hexagonale ou sont pourvus d'une denture développante.
